# NEUE EUROPÄISCHE PATENTSCHRIFT

(11) **EP 0 270 537 B2**
(45) Veröffentlichungstag und Bekanntmachung des Hinweises auf die Entscheidung über den Einspruch: **06.04.1994**
(45) Hinweis auf die Patenterteilung: 19.12.1990
(21) Anmeldenummer: 86904819.9
(22) Anmeldetag: 05.08.1986
(51) Int. Cl.: H04N 5/782, H04N 7/087

(54) **EMPFÄNGERSEITIGE EINRICHTUNG ZUM SENDERSEITIG GESTEUERTEN BETÄTIGEN**
DEVICE LOCATED AT THE RECEIVER END FOR ACTUATION CONTROLLED FROM THE TRANSMITTER END
DISPOSITIF AGENCE DU COTE RECEPTEUR POUR L'ACTIONNEMENT COMMANDE DEPUIS LE COTE EMETTEUR

(30) Priorität: 08.08.1985 DE 3528467
(43) Veröffentlichungstag der Anmeldung: 15.06.1988
(73) Patentinhaber: Deutsche Thomson-Brandt GmbH, 78003 Villingen-Schwenningen (DE)
(72) Erfinder: EIGELDINGER, Norbert, D-7730 Villingen-Schwenningen (DE); LASKUS, Rolf, D-7730 Villingen-Schwenningen (DE)
(74) Vertreter: Einsel, Robert, Dipl.-Ing.
(86) Internationale Anmeldenummer: EP8600461
(87) Internationale Veröffentlichungsnummer: WO8701001

(56) Entgegenhaltungen:
- EP-A- 0 041 121
- EP-A- 0 118 104
- DE-C- 3 313 799
- DE-C- 3 512 156
- Nachrichtentechnische Zeitschrift, Band 15, Nr.6, Juni 1982 Schwäbisch Gmünd (DE) H.Eckard Krüger et al.: "Das digitale Fernsehkennungssystem ZPS", S. 368-376

## Beschreibung

Die Erfindung betrifft eine empfängerseitige Einrichtung zum senderseitig gesteuerten Betätigen eines empfängerseitigen Gerätes mittels eines während der gesamten Dauer eines Sendebeitrages übertragenen, diesen Sendebeitrag charakterisierenden Kennsignals, mit nicht durch das Kennsignal gestartetem Betrieb des Gerätes in einer vorbestimmten Betriebsart. Eine derartige Einrichtung dient beispielsweise dazu, ein korrektes Aufzeichnen des durch das betreffende Kennsignal charakterisierten Sendebeitrages zu ermöglichen. Das Kennsignal wird als zusätzliche Information zum Ton- und/oder Videosignal übertragen, etwa über einen sogenannten Hilfsträger, eine sogenannte Datenzeile im Videosignal oder dergleichen.

Aus der EP-A3-0 118 104 ist eine Einrichtung der eingangs genannten Art bekannt. Der dort offenbarte, nicht durch ein Kennsignal gestartete Betrieb des Gerätes in einer vorbestimmten Betriebsart besteht darin, daß mit Hilfe einer Zeitschaltuhr zu einem vorgebbaren Zeitpunkt eine Vergleichsbetriebsart zum Vergleichen der übertragenen Kennsignaldaten mit den Daten der Programmwünsche gestartet wird. Sobald beim Vergleichen das dem betreffenden Programmwunsch entsprechende Kennsignal erkannt wird, wird die vorbestimmte Betriebsart - also das weitere Vergleichen - nicht mehr fortgesetzt, sondern beendet.

Der Erfindung liegt die Aufgabe zugrunde, eine Einrichtung zu schaffen, durch die auf für den Benutzer einfache Weise ein dem Sendebeitrag angepaßter Betrieb des empfängerseitigen Gerätes in der vorbestimmten Betriebsart auch dann ermöglicht wird, wenn diese Betriebsart nicht durch das Kennsignal gestartet wurde.

Diese Aufgabe wird erfindungsgemäß durch die in Anspruch 1 angegebenen Merkmale gelöst. Weiterbildungen der Erfindung ergeben sich aus den Unteransprüchen.

Die erfindungsgemäße Einrichtung bietet den Vorteil, daß das empfängerseitige Gerät im wesentlichen nur noch genau so lange in der vorbestimmten Betriebsart verbleibt, wie der zum Zeitpunkt des Aktivierens der Einrichtung gerade empfangene Sendebeitrag noch andauert.

Daraus kann sich vorteilhaft eine Senkung des Verbrauchs an elektrischer Energie, im Falle von Aufzeichnungsgeräten auch insbesondere eine Verringerung der Abnutzung bewegter Teile und/ oder eine bessere Ausnutzung von Aufzeichnungsträgern, beispielsweise Ton- oder Videobändern, -Cassetten, -Disketten oder dergleichen ergeben.

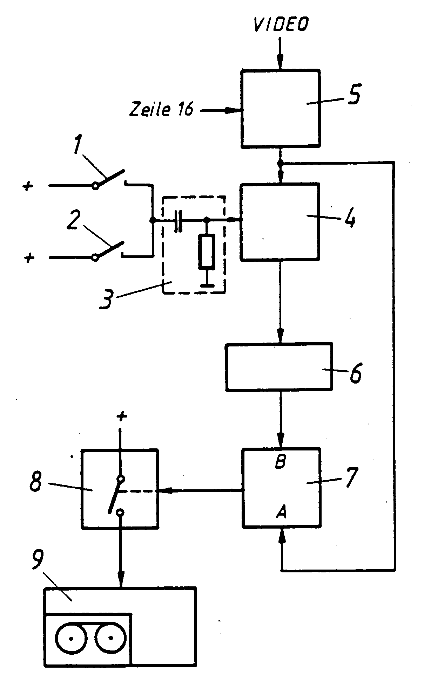

Weitere Vorteile, Merkmale und Einzelheiten der Erfindung ergeben sich aus der nachfolgenden Beschreibung eines Ausführungsbeispiels anhand der Figur, in der ein senderseitig gesteuertes Betätigen eines Videorecorders durch die erfindungsgemäße Einrichtung dargestellt ist.

Der in der Figur gezeigte Videorecorder (VCR) 9 weist je eine nicht näher dargestellte Taste für Aufnahmebetrieb ("Aufnahmetaste") und für sogenannten "Quick-Start" auf. Bei Betätigen der Aufnahmetaste wird der Videorecorder 9 auf Dauer in den Aufzeichnungsbetrieb versetzt, während er bei Betätigen der Quick-Start-Taste für eine beispielsweise in 30-Minuten-Schritten einstellbare Zeitdauer in den Aufzeichnungsbetrieb versetzt wird.

Bei Betätigen der Aufnahme- oder der Quick-Start-Taste wird zugleich ein Kontakt 1 bzw. 2 geschlossen, wodurch an ein aus einem Kondensator und einem an Masse anliegenden Widerstand bestehendes Differenzierglied 3 eine positive Spannung + angelegt wird. Der dabei über das Differenzierglied 3 erzeugte Impuls öffnet für eine kurze Zeit ein Tor 4 für ein am Eingang eines Zeilenselektors 5 anliegendes Videosignal. Der Zeilenselektor 5 selektiert die sechzehnte Zeile des Videosignals, die sogenannte Datenzeile, in der ein einen Sendebeitrag charakterisierendes Kennsignal - auch Video-Programm-System- oder VPS-Signal genannt - übertragen wird.

In diesem Kennsignal enthaltene Daten werden in einem Speicher 6 abgelegt. Dabei brauchen nicht notwendig alle in dem Kennsignal enthaltene Daten in den Speicher eingelesen zu werden. Beispielsweise können die die empfangene Sendeanstalt oder das zugehörige Heimatland des Senders charakterisierenden Daten unberücksichtigt bleiben, sofern an der Frequenzabstimmung des Videorecorders 9 während des Aufzeichnungsbetriebs keine Veränderungen vorgenommen werden.

Während der gesamten Dauer des betreffenden Sendebeitrages ändert sich das ihn charakterisierende Kennsignal nicht. Die in dem Kennsignal enthaltenen Daten oder die im oben geschilderten Sinne erforderlichen, in dem Kennsignal enthaltenen Daten werden einem Eingang A einer Vergleicherstufe 7 zugeführt. An einem anderen Eingang B der Vergleicherstufe 7 liegen die in dem Speicher 6 abgespeicherten Daten an.

Solange die an den beiden Eingängen A und B anliegenden Informationen gleich sind bzw. im oben erläuterten Sinnebei den im vorliegenden Fall interessierenden Daten gleich sind, schaltet die Vergleichsstufe 8 durch, die den Videorecorder im Aufzeichnungsbetrieb hält. Es kann vorgesehen sein, daß die Schaltstufe 8 nur dann betrieben werden kann, wenn sie zuvor auf in der Figur nicht näher dargestellte Weise aktiviert wurde, beispielsweise über einen Schalter an eine Versorgungsspannung angelegt ist.

Sobald sich das Kennsignal - bei seinen hier interessierenden Daten - ändert, weil beispielsweise die Sendung beendet oder unterbrochen oder der Sender gestört ist, fällt der Vergleich der an den Eingängen A und B der Vergleicherstufe 7 anliegenden Daten negativ aus. Die Vergleicherstufe 7 schaltet daher in erwünschter Weise den Aufzeichnungsbetrieb über die Schaltstufe 8, gegebenenfalls auch den Videorecorder insgesamt ab.

## Patentansprüche

1. Empfängerseitige Einrichtung zum senderseitig gesteuerten Betätigen eines empfängerseitigen Gerätes mittels eines während der gesamten Dauer eines Sendebeitrages übertragenen, diesen Sendebeitrag charakterisierenden Kennsignals, mit nicht durch das Kennsignal gestartetem Betrieb des Gerätes in einer vorbestimmten Betriebsart, dadurch gekennzeichnet, daß bei einem bei Beginn oder während des Sendebeitrages nicht durch das Kennsignal erfolgenden Aktivieren der Einrichtung empfängerseitig vorgesehene Mittel den weiteren, in der vorbestimmten Betriebsart erfolgenden Betrieb des Gerätes durch das Kennsignal gesteuert aufrecht erhalten, wobei die Einrichtung
a) einen Speicher (6) aufweist, in den automatisch den Sendebeitrag charakterisierende Daten, die beim Aktivieren der Einrichtung in dem Kennsignal enthalten sind, eingespeichert werden, und
b) einen Vergleicher (7) aufweist, der die gespeicherten Daten mit den entsprechenden Daten des Kennsignals vergleicht und während der gesamten Dauer des Übereinstimmens der gespeicherten Daten mit den entsprechenden Daten des Kennsignals bei erfolgtem Aktivieren der Einrichtung den Betrieb des Gerätes in der vorbestimmten Betriebsart bewirkt.

2. Einrichtung nach Anspruch 1, dadurch gekennzeichnet, daß die den Sendebeitrag charakterisierenden Daten bis zum Aktivieren der Einrichtung laufend neu in den Speicher (6) eingelesen werden und sodann die zuletzt eingelesenen Daten in dem Speicher verbleiben.

3. Einrichtung nach Anspruch 1 oder 2, dadurch gekennzeichnet, daß sie das empfängerseitige Gerät nur so lange in der vorbestimmten Betriebsart beläßt, wie die gespeicherten Daten mit den entsprechenden Daten des Kennsignals übereinstimmen.

4. Einrichtung nach einem der Ansprüche 1 bis 3, dadurch gekennzeichnet, daß sie den Betrieb des empfängerseitigen Gerätes stoppt, wenn die gespeicherten Daten mit den entsprechenden Daten des Kennsignals über eine vorbestimmte Zeitdauer hinaus nicht mehr übereinstimmen.

5. Einrichtung nach einem der Ansprüche 1 bis 4, dadurch gekennzeichnet, daß sie den Betrieb des empfängerseitigen Gerätes unterbricht, wenn ein vorbestimmtes, eine senderseitige Unterbrechung kennzeichnendes Kennsignal übertragen wird, und daß sie hiernach bei erneutem Übereinstimmen der gespeicherten Daten mit den entsprechenden Daten des den Sendebeitrag charakterisierenden Kennsignals erneut den Betrieb des empfängerseitigen Gerätes in derselben Betriebsart bewirkt.

6. Einrichtung nach einem der Ansprüche 1 bis 5, dadurch gekennzeichnet, daß ein Schalter (Kontakte 1 bzw. 2) vorgesehen ist, der bei seinem Betätigen die Einrichtung aktiviert.

7. Einrichtung nach einem der Ansprüche 1 bis 6, dadurch gekennzeichnet, daß das empfängerseitige Gerät ein Aufzeichnungsgerät, insbesondere ein Audio- oder ein Videorecorder (VCR), und die vorbestimmte Betriebsart der Aufzeichnungsbetrieb ist.

8. Einrichtung nach Anspruch 7, dadurch gekennzeichnet, daß ein Schalter zum schnellen Einleiten des Aufzeichnungsbetriebes vorgesehen ist (Quick-Start-Schalter), bei dessen Betätigen zugleich auch die Einrichtung aktiviert wird.

9. Einrichtung nach einem der Ansprüche 1 bis 6, dadurch gekennzeichnet, daß das empfängerseitige Geräte ein Rundfunkempfangsgerät, insbesondere ein Hörfunk- oder ein Fernsehempfangsgerät, und die vorbestimmte Betriebsart der Wiedergabebetrieb des Gerätes ist.

## Claims

1. An arrangement at the receiver end for transmitter end controlled actuation of a receiver end device with the aid of an identification signal transmitted during the whole duration of a transmission and characterising this transmission, with operation of the device in a predetermined mode of operation, which is not started by the identification signal, characterised in that with activation of the arrangement at the beginning of or during the transmission, which does not take place through the dentification signal, means provided at the receiver end maintain the further operation of the device, which takes place in the predetermined mode of operation, controlled by the identification signal, said arrangement including
a) a memory (6) in which data characterising the transmission is automatically stored, said data being contained in the identification signal during activation of the arrangement, and
b) a comparator (7) which compares the stored data with the corresponding data of the identification signal and during the whole duration of coincidence of the stored data with the corresponding data of the identification signal effects operation of device in the predetermined mode of operation when the arrangement has been activated.

2. An arrangement according to claim 1, characterised in that the data characterising the transmission is read continuously anew into the memory (6) until the arrangement is activated and then the data last read in remains in the memory.

3. An arrangement according claim 1 or 2 characterised in that it only leaves the receiver end device in the predetermined mode of operation as long as the stored data coincide with the corresponding data of the identification signal.

4. An arrangement according to any one of claims 1 to 3, characterised in that it stops the operation of the receiver end device, if the stored data no longer coincide with the corresponding data of the identification signal over a predetermined period of time.

5. An arrangement according to any one of claims 1 to 4, characterised in that it interrupts the operation of the receiver end device, if a predetermined code signal identifying an interruption at the transmitter end is transmitted, and that it thereafter again effects the operation of the device at the receiver end in the same mode of operation when the stored data again coinciae with the corresponding data of the identification signal characterising the transmission.

6. An arrangement according to any one of claims 1 to 5, characterised in that a switch (contacts 1 or 2) is provided which activates the arrangement with its actuation.

7. An arrangement according to any one of claims 1 to 6, characterised in that the device at the receiver end is a recording device, more particularly an audio or a video recorder (VCR), and the predetermined mode of operation is the recording mode.

8. An arrangement according to claim 7, characterised in that a switch is provided for rapid introduction of the recording mode (Quick-Start switch), on actuation of which the arrangement is immediately activated.

9. An arrangement according to any one of claims 1 to 6, characterised in that the receiver end device is a broadcast-receiving device, more particularly a radio or television receiving device, and the predetermined mode of operation is the reproduction mode of the device.

## Revendications

1. Dispositif côté récepteur pour actionner de manière commandée par le côté émetteur un appareil côté récepteur au moyen d'un signal d'identification transmis pendant toute la durée d'une émission et caractérisant cette émission, la marche de l'appareil dans un mode prédéterminé n'étant pas lancée par le signal d'identification, **caractérisé en ce que**, lors d'une activation du dispositif, au début de l'émission ou pendant l'émission, qui ne résulte pas du signal d'identification, des moyens prévus côté récepteur, commandés par le signal d'identification, maintiennent la poursuite de la marche de l'appareil dans le mode prédéterminé, ce dispositif comprenant
a) une mémoire (6) dans laquelle les données qui caractérisent l'émission, qui sont contenues dans le signal d'identification lors de l'activation du dispositif, sont automatiquement mises en mémoire,
b) un comparateur (7) qui compare les données mémorisées avec les données correspondantes du signal d'identification et qui provoque le fonctionnement de l'appareil dans le mode prédéterminé pendant toute la durée de la concordance des données mémorisées avec les données correspondantes du signal d'identification, lorsque l'activation du dispositif a eu lieu.

2. Dispositif selon la revendication 1 **caractérisé en ce** que les données caractérisant l'émission sont constamment remises en mémoire dans la mémoire (6) jusqu'à l'activation du dispositif et que les dernières données mémorisées restent ensuite dans la mémoire.

3. Dispositif selon l'une des revendications 1 ou 2, **caractérisé en ce** qu'il ne laisse l'appareil côté récepteur dans le mode prédéterminé que tant que les données mémorisées concordent avec les données correspondantes du signal d'identification.

4. Dispositif selon l'une des revendications 1 à 3 **caractérisé en ce** qu'il arrête la marche de l'appareil côté récepteur lorsque les données mémorisées ne concordent plus avec les données correspondantes du signal d'identification au-delà d'une durée prédéterminée.

5. Dispositif selon l'une des revendications 1 à 4, **caractérisé en ce** qu'il interrompt la marche de l'appareil côté récepteur lorsqu'un signal d'identification prédéfini, qui caractérise une interruption côté émetteur, est transmis et qu'il provoque ensuite à nouveau la marche de l'appareil côté récepteur dans le même mode, lorsque les données mémorisées concordent à nouveau avec les données correspondantes du signal d'identification qui caractérise l'émission.

6. Dispositif selon l'une des revendications 1 à 5, **caractérisé** **en ce** qu'il est prévu un commutateur (contacts 1 et/ou 2) qui active le dispositif lorsqu'il est actionné.

7. Dispositif selon l'une des revendications 1 à 6 , **caractérisé en ce** que l'appareil côté récepteur est un appareil d'enregistrement, en particulier un enregistreur audio ou vidéo (magnétoscope à cassettes) et que le mode prédéterminé est le mode d'enregistrement.

8. Dispositif selon la revendication 7, **caractérisé en ce** qu'un commutateur est prévu pour la mise en marche rapide du mode d'enregistrement (commutateur de mise en marche rapide), commutateur lors de l'actionnement duquel le dispositif est également activé.

9. Dispositif selon l'une des revendications 1 à 6, **caractérisé en ce** que l'appareil côté récepteur est un récepteur de radiodiffusion, en particulier un appareil de radio ou un appareil récepteur de télévision, et que le mode prédéterminé est le mode de reproduction de l'appareil.
